# EUROPEAN PATENT APPLICATION

(11) **EP 1 857 502 A1**
(43) Date of publication of application: **21.11.2007**
(21) Application number: 06008812.7
(22) Date of filing: 27.04.2006
(51) Int. Cl.: C08K 3/22, C08L 23/12, H01B 3/44, C08L 23/10, H01B 7/295

(54) **Flame retardant polypropylene composition comprising metal hydroxide or hydrated compound for covering automotive wire**

(71) Applicant: Borealis Technology Oy, 06101 Porvoo (FI)
(72) Inventor: Ahlstrand, Lars-Erik, 444 94, Ucklum (SE); Malmros, Peter, 249 693 Singapore (SG); Sultan, Bernt-Äke, 444 42 Stenungsund (SE); Wiklund, Outi, 06150, Porvoo (FI); Robinson, James Elliott, 1332, Genval (SE)
(74) Representative: Kador & Partner

(57) **Abstract**

The present invention relates to a flame retardant polypropylene composition comprising a base resin which is free of any grafted polypropylene component and which comprises
(C) a polypropylene, and
(D) a polar ethylene copolymer in an amount of from 7 to 40 wt% based on the total composition, having a MFR₂ (measured at 190 °C, 2.16 kg) of 20 or below, and
(C) a metal hydroxide or hydrated compound in an amount of more than 43 wt% based on the total composition,

in particular for a conduit, appliance, and/or automotive wire, to a wire or cable comprising said flame retardant polypropylene composition, to a process for the production of such a wire or cable, and to the use of said flame retardant polypropylene composition for the production of a flame retardant layer of a wire or cable.

## Description

The present invention relates to a flame retardant polypropylene composition, in particular for a conduit, appliance, and/or automotive wire, comprising a polypropylene and a metal hydroxide or hydrated compound. Furthermore, the present invention relates to a wire or cable comprising said flame retardant polypropylene composition, to a process for the production of such a wire or cable, and to the use of said flame retardant polypropylene composition for the production of a flame retardant layer of a wire or cable.

For coating of conduit, appliance or automotive wires in automobile applications today mainly PVC is used. The reason for its use is that PVC has good mechanical stability, formability by extrusion, flexibility, and wear and flame resistance. However, on the one hand, from environmental considerations the use of PVC is undesirable because of its halogen content. Furthermore, also the deliberation of poisonous and corrosive gases upon combustion makes the use of PVC undesirable. Finally, automotive cables are classified into temperature classes which means that the cable must be able to withstand a continuous heat. For example, in class T3, the cable must withstand a continuous temperature of 125 °C, which is too high for normal PVC cables.

For these reasons there is a tendency to replace PVC by polyolefin compositions in automotive applications. However, as polyolefins are inherently combustible materials and, as high flame resistance is required for automotive cables and wires, flame resistance of such polyolefin compositions must be improved by the use of additives.

To obtain polyolefin compositions with improved flame resistance it is known to incorporate specific additives into the composition, such as halogen based chemicals or phosphate based chemicals. Each of these additives has its own deficiencies, such as incompatibility with the polyolefin, the presence or emission of harmful, toxic or otherwise undesirable compounds and/or high costs.

It is also known to add metal hydroxides to polyolefin compositions in order to improve the flame resistance, as e.g. disclosed in EP 1 213 322. However, the compositions disclosed therein comprise maleic anhydride grafted polypropylene which generates unacceptable high costs for the compositions. Furthermore, the properties and, in particular, the balance of the properties of the compositions disclosed therein, in particular flame retardancy, abrasion resistance, processability and low temperature properties, can still be improved.

Conduit, appliance, or automotive wires are cables which apart from a conducting core and an optional thin skin layer only comprise one polymer layer. This layer accordingly must fulfil several functions at the same time, which e.g. in medium and high voltage cables are fulfilled by separate layers. These functions comprise those of an insulation layer and an outer, protecting jacket.

Accordingly, a polymer composition used for the production of, in particular, a conduit, appliance, or automotive wire, must meet several demanding requirements at the same time, including good insulation behaviour, good mechanical properties, in particular good abrasion resistance, good flame retardant properties and good processing properties.

As mentioned, optionally the conduit, appliance, or automotive layer may further have a skin layer which may be coloured. However, said skin layer does not contribute to any significant extent to meet the requirements and to fulfil the functions of the sole polymer layer of a conduit, appliance, or automotive wire as discussed above.

It is therefore an object of the present invention to provide a flame retardant composition with improved flame retardancy and, at the same time, good mechanical, in particular abrasion, properties and good processing behaviour for use, in particular, in a conduit, appliance, or automotive wire. Furthermore, the composition should also be able to continuously withstand higher temperatures, e.g. temperatures up to 125 °C.

It has now surprisingly been found that the objects of the present invention can be simultaneously achieved by using a composition for the production of a flame retardant layer which is free of any grafted polypropylene component and which, apart from a polypropylene and a hydroxide, comprises an ethylene copolymer which comprises polar monomer units and which has a MFR₂ (measured under a load of 2.16 kg and at a temperature of 190 °C) which is comparatively low, usually 10 g/10min at most.

Therefore, the present invention provides a flame retardant polypropylene composition comprising a base resin which is free of any grafted polypropylene component and which comprises
(A) a polypropylene, and
(B) a polar ethylene copolymer in an amount of from 7 to 40 wt% based on the total composition, having a MFR₂ (measured at 190 °C, 2.16 kg) of 20 or below, and
(C) a metal hydroxide or hydrated compound in an amount of more than 43 wt% based on the total composition.

The composition according to the invention has a good abrasion resistance which is evidenced by the fact that cable layers made from the composition comply with abrasion test requirements. Furthermore, the compositions show good flame retardancy as shown in the 45° test for automotive cables, i.e. ISO 6722-2002. Still further, the composition is able to withstand higher temperatures of up to 125 °C for long periods of time. Finally, the compositions of the invention are environmentally friendly materials.

Preferably, the composition is free of halogen- and phosphorous-containing compounds as flame retardancy aids.

More preferably, the composition is entirely free of halogen-containing compounds. However, phosphorous containing-compounds may be present in the composition as stabilizers, usually in an amount of below 5000 ppm, more preferably below 2500 ppm.

The term "base resin" is intended to denote all polymeric components of the composition of the invention.

The term "polypropylene" comprises both propylene homopolymers and copolymers, including heterophasic copolymers.

Component (A) may consist of a single polypropylene, but (A) may also comprise a mixture of different polypropylenes. This also applies for all preferred embodiments of component (A).

The same applies for components (B) and (C), i.e. they may consist of a single compound, but may also comprise a mixture of different compounds. This also applies for all preferred embodiments of components (B) and (C).

In a preferred embodiment, the base resin consists of components (A) and (B).

In particular, it is preferred that the base resin, and hence also the total composition, is free of any grafted polymer, in particular grafted polyolefin, components.

Preferably, polypropylene (A) has a MFR₂ measured according to ISO 1133 at 230 °C and 2.16 kg of 0.1 g/10min or more, more preferably of 0.2 g/10min or more, and most preferably of 0.5 g/10min or more.

Furthermore, preferably polypropylene (A) has a MFR₂ of 15 g/10min or less, more preferably of 10 g/10min or less, still more preferably of 5 g/10min or less, and most preferably of 2 g/10min or less.

Polypropylene (A) preferably has a tensile modulus measured according to ISO 527-2 of 800 to 2000 MPa, more preferably of 900 to 1600 MPa.

The melt temperature of polypropylene (A) preferably is > 150 °C, more preferably is > 160 °C.

In a preferred embodiment, polypropylene (A) comprises, more preferably consists of, a propylene heterophasic copolymer comprising a polypropylene homo- or copolymer as matrix polymer and an incorporated ethylene-propylene-rubber.

Preferably, the matrix in the propylene heterophasic copolymer is made of propylene homopolymer.

The heterophasic propylene copolymer may be produced by multistage process polymerisation of propylene and ethylene and optionally alpha-olefin such as bulk polymerisation, gas phase polymerisation, slurry polymerisation, solution polymerisation or combinations thereof using conventional catalysts. The heterophasic copolymer can be made either in loop reactors or in a combination of loop and gas phase reactor. Those processes are well known to one skilled in the art.

A preferred process is a combination of a bulk slurry loop reactor(s) and gas phase reactor(s). First, the propylene homo- or copolymer matrix is made either in loop reactor(s) or in a combination of loop and gas phase reactor.

The polymer produced in this way is transferred into another reactor and the disperse phase, the ethylene-propylene-rubber, is produced by copolymerising a mixture of ethylene and propylene with the same catalyst system, so obtaining a heterophasic system consisting of a semicrystalline matrix with a nearly amorphous elastomeric component dispersed within it. Preferably this polymerisation step is done in a gas phase polymerisation.

A suitable catalyst for the polymerisation of the heterophasic copolymer is any stereospecific catalyst for propylene polymerisation which is capable of polymerising and copolymerising propylene and comonomers at a temperature of 40 to 110 °C and at a pressure from 10 to 100 bar. Ziegler-Natta catalysts as well as metallocene catalysts are suitable catalysts.

Alternatively to producing the heterophasic copolymer in a sequential multistage process as described above, it can be produced by polymerising the matrix polymer and the ethylene-propylene-rubber in separate steps and melt blending the two polymers.

"Rubber" and "elastomeric copolymer" are in this context used as synonyms.

Also, in order to further improve processability and melt strength, the flame retardant composition may preferably comprise a polypropylene showing strain hardening behaviour. Such a polypropylene is e.g. described in EP 1 301 343, to which it is referred herewith. It is in particular referred to the definition of "strain hardening behaviour" as given in paragraphs [0008] to [0010] of this document. As mentioned there, a polypropylene showing strain hardening behaviour is defined to have a haul-off force F > 15 cN and a drawability with a draw down velocity v > 150 mm/s in the test as described in detail in EP 1 301 343 and as illustrated in Fig. 1 and 2 therein.

An ethylene propylene elastomeric copolymer may be produced by known polymerisation processes such as solution, suspension and gas-phase polymerisation using conventional catalysts. Ziegler-Natta catalysts as well as metallocene catalysts are suitable catalysts.

A widely used process is the solution polymerisation. Ethylene, propylene and catalyst systems are polymerised in an excess of hydrocarbon solvent. Stabilisers and oils, if used, are added directly after polymerisation. The solvent and unreacted monomers are then flashed off with hot water or steam, or with mechanical devolatilisation. The polymer, which is in crumb form, is dried with dewatering in screens, mechanical presses or drying ovens. The crumb is formed into wrapped bales or extruded into pellets.

The suspension polymerisation process is a modification of bulk polymerisation. The monomers and catalyst system are injected into the reactor filled with propylene. The polymerisation takes place immediately, forming crumbs of polymer that are not soluble in the propylene. Flashing off the propylene and comonomer completes the polymerisation process.

The gas-phase polymerisation technology consists of one or more vertical fluidised beds. Monomers and nitrogen in gas form along with catalyst are fed to the reactor and solid product is removed periodically. Heat of reaction is removed through the use of the circulating gas that also serves to fluidise the polymer bed. Solvents are not used, thereby eliminating the need for solvent stripping, washing and drying.

The production of ethylene propylene elastomeric copolymers is also described in detail in e.g. US 3,300,459, US 5,919,877, EP 0 060 090 A1 and in a company publication by EniChem "DUTRAL, Ethylene-Propylene Elastomers" , pages 1-4 (1991).

Alternatively, elastomeric ethylene-propylene copolymers, which are commercially available and which fulfil the indicated requirements, can be used.

The heterophasic copolymer is then produced by combining the matrix polymer in the form of powder or granules and the elastomeric copolymer in a melt mixing device.

In case a polypropylene random copolymer is used as matrix polymer for the heterophasic copolymer, the comonomers preferably are linear alpha-olefins or branched alpha-olefins like ethylene, butene, hexene etc. In the present invention ethylene is most preferred.

The comonomer content is preferably 10 wt.% or less, more preferably is between 4 and 8 wt.%, based on the total polypropylene random copolymer.

However, preferably the matrix polymer is a polypropylene homopolymer.

Furthermore, the heterophasic copolymer contains an ethylene-propylene-rubber preferably in a content of equal to or below 35 wt%, more preferably from 12 to 22 wt%, based on the total weight of the heterophasic propylene copolymer.

The ethylene-propylene-rubber preferably has a propylene content of 40 to 80 wt.%, more preferably of from 45 to 60 wt.%, based on the total amount of the ethylene-propylene-rubber.

The ethylene-propylene rubber apart from ethylene and propylene monomer units may contain further alpha-olefin monomer units. However, it is preferred that the ethylene-propylene rubber consists of ethylene and propylene monomer units.

Preferably, polypropylene (A) is present in the composition an amount of 30 wt.% or more, more preferably 32 wt.% or more, and most preferably 33 wt.% or more.

Furthermore, preferably, polypropylene (A) is present in the composition an amount of 50 wt.% or less, more preferably 40 wt.% or less, still more preferably 38 wt.% or less, and most preferably 37 wt.% or less.

Polar ethylene copolymer (B) is preferably produced by copolymerisation of ethylene monomers with appropriate comonomers bearing polar groups.

It is preferred that the polar copolymer comprises a copolymer of ethylene, with one or more comonomers selected from C₁- to C₆-alkyl acrylates, C₁- to C₆-alkyl methacrylates, hydroxy functional monomers, e.g. 2-hydroxyethyl (meth-)acrylate, acrylic acids, methacrylic acids, vinyl acetate and vinyl silanes. For example, the polar copolymer may also be a terpolymer of ethylene, one of the above mentioned monomers and a vinyl silane. The copolymer may also contain ionomeric structures (like in e.g. DuPont's Surlyn types).

Still further preferred, the polar copolymer is an ethylene/acrylate, and/or ethylene/acetate, copolymer.

Further preferred, the polar polymer comprises a copolymer of ethylene with C₁- to C₄-alkyl, such as methyl, ethyl, propyl, i-butyl or n-butyl, acrylates or vinyl acetate.

In a particularly preferred embodiment, the polar comonomer is butyl acrylate.

In addition to ethylene and the defined comonomers, the copolymers may also contain further monomers. For example, terpolymers between acrylates and acrylic acid or methacrylic acid, or acrylates with vinyl silanes, or acrylates with siloxane, or acrylic acid with siloxane may be used.

These copolymers may be crosslinked after extrusion, e.g. by irradiation. Silane-crosslinkable polymers may also be used, i.e. polymers prepared using unsaturated silane monomers having hydrolysable groups capable of crosslinking by hydrolysis and condensation to form silanol groups in the presence of water and, optionally, a silanol condensation catalyst.

It is further preferred that the polyethylene with polar groups makes up at least 30 wt.%, more preferred at least 50 wt.%, and still more preferred at least 70 wt.% of component (B). Most preferably, component (B) completely consists of the polyethylene with polar groups.

In a particularly preferred embodiment, polar polyethylene (B) is ethylene butyl acrylate copolymer (EBA).

Preferably, the amount of comonomer units with polar groups in polar ethylene copolymer (B) is 0.5 wt.% or more, more preferably is 1.0 wt.% or more, and most preferably is 2.0 wt.% or more.

Furthermore, preferably the amount of comonomer units with polar groups in polar ethylene copolymer (B) is 30 wt.% or less, more preferably is 20 wt.% or less, and most preferably is 17 wt.% or less.

Polar ethylene copolymer (B) preferably is present in the composition in an amount of 9 wt.% or more, more preferably of 11 wt.% or more, and most preferably of 12 wt.% or more.

Furthermore, polar ethylene copolymer (B) preferably is present in the composition in an amount of 35 wt.% or less, more preferably of 30 wt.% or less, and most preferably of 25 wt.% or less.

The melt flow rate MFR₂ of polar ethylene copolymer (B) preferably is 15 g/l0min or less, more preferably is 10 g/10min or less, still more preferably is 5 g/10min or less, still more preferably is 2 g/10min or less, and most preferably is 1 g/10min or less.

Preferably, in the flame retardant polypropylene composition according to the invention component (C) is present an amount of 70 wt.% or less, more preferably of 60 wt.% or less, still more preferably of 55 wt.% or less, and most preferably of 50 wt.% or less.

Furthermore, preferably component (C) is present in the composition an amount of 45 wt.% or more, more preferably of 46 wt.% or more, and most preferably of 47 wt.% or more.

Preferably, component (C) comprises, more preferably consists of, a metal hydroxide, more preferably a metal hydroxide of a metal of groups 1 to 13, more preferred groups 1 to 3 of the Periodic Table of Elements.

The numbering of chemical groups, as used herein, is in accordance with the IUPAC system in which the groups of the periodic system of the elements are numbered from 1 to 18.

Still more preferred, component (C) comprises, more preferably consists of, a hydroxide selected from the group of magnesium, calcium, barium and aluminium, and most preferred component (C) comprises, more preferably consists of, magnesium hydroxide.

Preferably, compound (C) comprises, more preferably consists of, a metal hydroxide or hydrated compound, which has been surface-treated with an organo silane compound, a polymer, a carboxylic acid or salt etc. to aid processing and provide better dispersion of the hydroxide/hydrated compound in the organic polymer. Such coatings usually do not make up more than 3 wt.% of the hydroxide/hydrated compound. Examples for coated Mg(OH)₂ are Magnifin H5HV commercially available from Martinswerke, Germany, or Kisuma 5AU available from Kisuma Chemicals BV.

In addition to the above-mentioned components (A), (B) and (C), the composition may contain further ingredients, such as for example antioxidants and or UV stabilizers, pigments, cure boosters, process aids etc. in small amounts.

Preferably, components (A), (B) and (C) are present in the composition in an amount of 90 wt.% or more, more preferably of 95 wt.% or more.

The composition preferably has an MFR₅ (190°C, 5kg) of 0.2 to 10, more preferably of 0.5 to 5 g/10min.

The flame retardant polymer composition of the present invention shows a superior abrasion resistance, so that it withstands in the abrasion test according to ISO 6722 (needle diameter 0.45 mm) on a cable with a conductor cross section of 0.75 mm², 100 cycles or more. Preferably, the composition has an abrasion resistance of 200 cycles or more, still more preferably of 300 or more, and most preferably of 350 or more.

The present invention further relates to a wire or cable comprising a layer made of the flame retardant polypropylene composition in any of the above described embodiments.

Preferably, the wire or cable is a conduit, appliance, or automotive wire consisting of an inner conductor core surrounded by a flame retardant layer made of a polypropylene composition in any of the above described embodiments, and, optionally, an outer skin layer.

The flame retardant layer of such a conduit, appliance, or automotive wire preferably has a thickness of 0.1 to 4 mm.

In case an outer skin layer is present, it has preferably a maximum thickness of 0.6 mm.

However, it is preferred that there is no skin layer present in the final cable, i.e. that the insulation layer is the outermost layer.

Still further, the conductor area of such a conduit, appliance, or automotive wire preferably is from 0.1 to 400 mm².

The invention furthermore relates to a process for the production of a flame retardant layer of a wire or cable comprising forming into such a layer a composition in any of the above described embodiments, and to the use of the flame retardant polypropylene composition in any of the above described embodiments for the production of a flame retardant layer of a wire or cable.

The flame retardant polymer composition forming the layer of the cable or wire according to the invention may be prepared by
a) preparation of a master batch comprising additives and polymer followed by compounding with inorganic filler and matrix polymer or
b) one step compounding of all components.

For mixing, a conventional compounding or blending apparatus, e.g. a Banbury mixer, a 2-roll rubber mill, Buss-co-kneader or a twin screw extruder may be used. Preferably, the composition will be prepared by blending them together at a temperature which is sufficiently high to soften and plasticise the polymer, typically a temperature in the range of 160 to 220 °C.

The polymer composition preferably is extruded to form the flame retardant layer. This is preferably done at a line speed of at least 20 m/min, more preferably at least 60 m/min and most preferably at least 100 m/min.

The pressure used for extrusion preferably is 50 to 500 bar.

In the following the present invention is further illustrated by means of examples.

### Examples:

### 1. Test methods

### a) Melt Flow Rate

The melt flow rate MFR₂ (MFR₅) of polyethylene compounds was measured in accordance with ISO 1133 at 190°C and a weight of 2.16 kg (5 kg). The melt flow rate MFR₂ of polypropylene compounds was measured in accordance with ISO 1133 at a weight of 2.16 kg, but at a temperature of 230 °C.

### b) Flame Retardancy

The purpose of the test method ISO 6722, paragraph 12 (resistance to flame propagation) is to determine the resistance to flame propagation for automotive cables. The cable (600 mm) is installed at a 45° angle to the vertical line and a flame produced by a Bunsen burner, fed with an appropriate gas, having a combustion tube of 9 mm internal diameter, and a flame height of 100 mm is applied onto the cable sample at a 90° angle 500 mm from the upper end of the insulation.

The test sample shell be exposed to the tip of the inner blue cone of the flame having a length of 50 mm. For cables having a conductor size of equal or smaller 2.5 mm² the flame is applied for 15 seconds. In order to fulfil the test, the flame should extinguish within 70 seconds after the burner flame has been taken away with a minimum of 50 mm of insulation from its top remaining unburned.

A wire fulfilling this criterion is marked "pass", otherwise it is marked "fail".

### c) Abrasion Resistance

The abrasion test was performed in full accordance with ISO 6722. The abrasion resistance as reported is based on the testing of a wire sample based on a 0.75 mm² 18 AWG stranded copper conductor with the nominal layer wall thickness being 0.3 mm (actual 0.4 mm). The needle diameters used were 0.25 mm and 0.45 mm, and the tested samples were not crosslinked. Results are given in Table 1, and are reported as cycles which the material is able to withstand. Materials which did not withstand 100 cycles with the 0.25 mm diameter needle, or 350 cycles with the 0.45 mm diameter needle were marked as "fail" in Table 1.

### 2. Compounding of Compositions and Extrusion of Cables

In the preparation of the flame retardant compositions, the following compounds were used:
- PP:: Heterophasic propylene copolymer BB 125M0 available from Borealis, comprising a matrix of propylene homopolymer with an ethylene propylene rubber dispersed therein (amount of total rubber in heterophasic propylene copolymer BB125MO is 16 wt%, with about 60 wt% of the rubber being ethylene units), d = 908 g/ccm, MFR₂ (230 °C, 2.16 kg) = 1.3 g/10min, tensile modulus (ISO 527-2) = 1300 MPa, melt temperature as determined by DSC (10 °C/min) = 164 °C,
- EBA1:: Ethylene butyl acrylate copolymer containing 8 wt.% of butyl acrylate, MFR₂ (190 °C, 2.16 kg) = 0.4 g/10 min,
- EBA2:: Ethylene butyl acrylate copolymer containing 17 wt.% of butyl acrylate, MFR₂ (190 °C, 2.16 kg) = 4.5 g/10 min,
- EBA3:: Ethylene butyl acrylate copolymer containing 17 wt.% of butyl acrylate, MFR₂ (190 °C, 2.16 kg) = 1.1 g/10 min,
- Mg(OH)₂:: Magnifin H5HV from Martinswerke, Germany.
- Stab.1:: Stabilizer Irganox B225,
- Stab.2:: Stabilizer PS802,

- Stab.3:: Stabilizer Irganox MD 1024.

Flame retardant polymer compositions were produced by compounding together the components in a Buss Co-kneader type PR46B-11D/H1.

The compositions were compounded as indicated above with amounts given in wt% of the components as indicated in Table 1.

Automotive wires were produced from the composition on a Nokia-Maillefer extruder, 60 mm/24D, with a melt temperature of 220 °C and a line speed of 100 m/min. The conductor was preheated to a setting temperature of 60 °C.

### 3. Results

The results given in Table 1 show that the flame retardant compositions according to the invention comply both with flame retardancy requirements and abrasion resistance, thus showing an improved balance of these properties. The composition may thus be applied for, in particular, demanding automotive applications.

**Table 1:**

| **Compositions Prepared** | | | | | | |
|---|---|---|---|---|---|---|
| | Example 1 | Example 2 | Example 3 | Comp. Example 1 | Comp. Example 2 | Comp. Example 3 |
| PP | 36.4 | 36.4 | 36.4 | 39.2 | 46.2 | - |
| EBA1 | 14.8 | - | - | - | 5.0 | 51.2 |
| EBA2 | - | 14.8 | - | - | - | - |
| EBA3 | - | - | 14.8 | 17.0 | - | - |
| Mg(OH)₂ | 47.5 | 47.5 | 47.5 | 42.5 | 47.5 | 47.5 |
| Stab. 1 | 0.4 | 0.4 | 0.4 | 0.4 | 0.4 | 0.4 |
| Stab.2 | 0.5 | 0.5 | 0.5 | 0.5 | 0.5 | 0.5 |
| Stab.3 | 0.4 | 0.4 | 0.4 | 0.4 | 0.4 | 0.4 |

| **Properties** | | | | | | |
|---|---|---|---|---|---|---|
| MFR₅ (190°C, 5kg) [g/10min] | 1.87 | | | | | |
| MFR₂ (230°C, 5kg) [g/10min] | 9.69 | 12.15 | 14.64 | 26.29 | | |
| Abrasion, 0.45 mm | 1093 | 547 | 439 | 548 | 530 | fail |
| Abrasion, 0.25 mm | 241 | 234 | 186 | 238 | n.m.* | fail |
| Single wire burning test | pass | pass | pass | fail | fail | pass |

| | | | | | | |
|---|---|---|---|---|---|---|
| * not measured | | | | | | |

## Claims

1. A flame retardant polypropylene composition comprising a base resin which is free of any grafted polypropylene component and which comprises
(A) a polypropylene, and
(B) a polar ethylene copolymer in an amount of from 7 to 40 wt% based on the total composition, having a MFR₂ (measured at 190 °C, 2.16 kg) of 20 or below, and
(C) a metal hydroxide or hydrated compound in an amount of more than 43 wt% based on the total composition.

2. Flame retardant polypropylene composition according to claim 1 wherein polypropylene (A) is a propylene heterophasic copolymer.

3. Flame retardant polypropylene composition according to any of the preceding claims wherein polypropylene (A) is present in the composition an amount of 30 wt.% or more.

4. Flame retardant polypropylene composition according to any of the preceding claims wherein polypropylene (A) is present in the composition an amount of 50 wt.% or less.

5. Flame retardant polypropylene composition according to any of the preceding claims wherein polypropylene (A) has a MFR₂ (230 °C, 2.16 kg) of 0.1 to 10 g/10min.

6. Flame retardant polypropylene composition according to any of the preceding claims wherein the amount of polar monomer units in polar ethylene copolymer (B) is 0.5 to 40 wt.%.

7. Flame retardant polypropylene composition according to any of the preceding claims wherein polar ethylene copolymer (B) is present in the composition in an amount of from 12 to 30 wt%.

8. Flame retardant polypropylene composition according to any of the preceding claims wherein the polar ethylene copolymer (B) comprises a copolymer of ethylene with one or more comonomers selected from C₁- to C₆-alkyl acrylates, C₁- to C₆-alkyl methacrylates, hydroxy functional monomers, e.g. 2-hydroxyethyl (meth-)acrylate, acrylic acids, methacrylic acids, vinyl acetate and vinyl silanes.

9. Flame retardant polypropylene composition according to any of the preceding claims wherein polar ethylene copolymer (B) is ethylene butylacrylate (EBA).

10. Flame retardant polypropylene composition according to any of the preceding claims wherein metal hydroxide (C) is present in the composition an amount of 60 wt.% or less.

11. Flame retardant polypropylene composition according to any of the preceding claims wherein metal hydroxide (C) comprises magnesium hydroxide.

12. Flame retardant polypropylene composition according to any of the preceding claims wherein components (A), (B) and (C) being present in the composition in an amount of at least 90 wt.%.

13. A wire or cable comprising a layer made of the flame retardant polypropylene composition according to any of the preceding claims.

14. Wire or cable according to claim 13 wherein the wire or cable is a conduit, appliance, or automotive wire consisting of an inner conductor core surrounded by a flame retardant layer made of a polypropylene composition according to any of claims 1 to 10, and, optionally, an outer skin layer.

15. Wire according to claim 14 wherein the flame retardant layer has a thickness of 0.1 to 4 mm.

16. Wire according to claims 14 or 15 which further has an outer skin layer with a maximum thickness of 0.6 mm.

17. Process for the production of a wire or cable which comprises forming the flame retardant polypropylene composition according to any of claims 1 to 12 into a flame retardant layer of the wire or cable.

18. Use of a flame retardant polypropylene composition according to any of claims 1 to 12 for the production of a flame retardant layer of a wire or cable.
